# EUROPEAN PATENT APPLICATION

(11) **EP 4 624 908 A1**
(43) Date of publication of application: **01.10.2025**
(21) Application number: 24853161.8
(22) Date of filing: 04.03.2024
(51) Int. Cl.: G01N 23/04, G01N 23/046, B65G 43/08

(54) **TESTING DEVICE AND TESTING METHOD FOR OBJECT TESTING**

(30) Priority: 17.08.2023 CN 202311041902
(71) Applicant: NUCTECH COMPANY LIMITED, Beijing 100084 (CN); Tsinghua University, Haidian District, Beijing 100084 (CN)
(72) Inventor: ZHANG, Li, Beijing 100084 (CN); CHEN, Zhiqiang, Beijing 100084 (CN); LI, Yuanjing, Beijing 100084 (CN); LI, Liang, Beijing 100084 (CN); HONG, Mingzhi, Beijing 100084 (CN); CHANG, Ming, Beijing 100084 (CN); WANG, Zinan, Beijing 100084 (CN)
(74) Representative: Winter, Brandl - Partnerschaft mbB
(86) International application number: PCT/CN2024/079876
(87) International publication number: WO 2025/035745

(57) **Abstract**

A detection device and a detection method for detecting an object are provided. The detection device includes a detection mechanism, a position sensing assembly and a conveying mechanism. The detection mechanism includes a radiation emitter and at least two radiation receivers, where the at least two radiation receivers are spaced apart in a conveying direction of an object, a detection region is provided between the radiation emitter and each radiation receiver, and the detection mechanism is configured to detect the object when the object is in the detection region. The position sensing assembly is configured to detect whether the object is in the detection region. The conveying mechanism is provided between the radiation emitter and the radiation receivers to convey the object, where the conveying mechanism is configured to convey the object at a first conveying speed when the detection mechanism is not detecting the object and convey the object at a second conveying speed when the detection mechanism is detecting the object, and the first conveying speed is greater than the second conveying speed.

## Description

### CROSS REFERENCE TO RELATED APPLICATION

This application claims priority to Chinese Patent Application No. 202311041902.5 filed on August 17, 2023, the content of which is incorporated herein by reference in its entirety.

### TECHNICAL FIELD

The present disclosure relates to a field of detection, and in particular to a detection device and a detection method for detecting a battery cell.

### BACKGROUND

With a continuous expansion of the demand for object detection, the market has higher requirements for a detection quality. Especially, in a field of power batteries, consistency requirements for battery cells are becoming increasingly stringent. When detecting a battery cell, it is desired to perform 100% detection on an interior of the battery cell using X-rays. In the related art, the battery cell is detected using a flat panel detector, and the battery cell is in a stationary state during a detection process, which results in a low scanning efficiency and has a great impact on a production efficiency of the battery cell.

### SUMMARY

According to the embodiments in a first aspect of the present disclosure, a detection device for detecting an object is provided. The detection device includes a detection mechanism, a position sensing assembly and a conveying mechanism. The detection mechanism includes a radiation emitter and at least two radiation receivers, where the at least two radiation receivers are spaced apart in a conveying direction of an object, a detection region is provided between the radiation emitter and each radiation receiver, and the detection mechanism is configured to detect the object when the object is in the detection region. The position sensing assembly is configured to detect whether the object is in the detection region. The conveying mechanism is provided between the radiation emitter and the radiation receivers to convey the object, where the conveying mechanism is configured to convey the object at a first conveying speed when the detection mechanism is not detecting the object and convey the object at a second conveying speed when the detection mechanism is detecting the object, and the first conveying speed is greater than the second conveying speed.

In some embodiments, the conveying mechanism includes a head end and a tail end opposite to each other in the conveying direction of the object; the radiation receiver at least includes a first receiver at a position close to the head end of the conveying mechanism and a second receiver at a position close to the tail end of the conveying mechanism; and the detection region includes a first detection sub-region provided between the first receiver and the radiation emitter and a second detection sub-region provided between the second receiver and the radiation emitter.

Optionally, the position sensing assembly includes a first sensing element configured to detect whether the object has entered the first detection sub-region and a second sensing element configured to detect whether the object has left the second detection sub-region. When the first sensing element detects that the object has entered the first detection sub-region, the radiation emitter along with the first receiver detect the object, and the radiation emitter along with the second receiver detect the object, so as to perform a segmented detection of the object.

In some embodiments, the detection device further includes a collimation mechanism having at least two collimation grooves, where the collimation grooves are configured to filter an interference radiation to perform a collimation of radiation, and each collimation groove corresponds to one respective radiation receiver.

Optionally, the collimation mechanism includes a first collimator provided between the radiation emitter and the conveying mechanism and/or a second collimator provided between the conveying mechanism and the radiation receiver, and each of the first collimator and the second collimator is provided with at least two collimation grooves.

In some embodiments, the detection device further includes an imaging assembly configured to perform stitching imaging based on detection results of the detection mechanism.

According to the embodiments in a second aspect of the present disclosure, a detection method for detecting an object is provided. The detection method is applied to a detection device for detecting an object, and the detection device includes a detection mechanism, a position sensing assembly and a conveying mechanism. The detection method includes: detecting whether the object is in a detection region by using the position sensing assembly; conveying the object at a first conveying speed by using the conveying mechanism when the object is not in the detection region; and detecting the object by using the detection mechanism and conveying the object at a second conveying speed by using the conveying mechanism when the object is in the detection region.

Optionally, the detecting whether the object is in a detection region by using the position sensing assembly includes: detecting whether the object has entered a first detection sub-region by using a first sensing element; and detecting whether the object has left a second detection sub-region by using a second sensing element.

Optionally, when the first sensing element detects that the object has entered the first detection sub-region, the radiation emitter and a first receiver detect the object in the first detection sub-region, and the radiation emitter and a second receiver detect the object in the second detection sub-region; and when the second sensing element detects that the object has left the second detection sub-region, the detection mechanism stops detection.

In some embodiments, after the detection mechanism has detected the object, a stitching imaging is performed based on detection results of the detection mechanism by using an imaging assembly.

Additional aspects and advantages of the present disclosure may be partially provided in the following description, or partially become apparent from the following description, or may be understood through the practice of the present disclosure.

### BRIEF DESCRIPTION OF THE DRAWINGS

The above and/or additional aspects and advantages of the present disclosure will become apparent and will be easily understood from the description of the embodiments in conjunction with the following drawings. In the drawings:
FIG. 1 shows a schematic diagram of a detection device in which a battery cell has not entered a first detection sub-region according to the embodiments in a first aspect of the present disclosure;
FIG. 2 shows a schematic diagram of a detection mechanism of the detection device according to the embodiments in the first aspect of the present disclosure;
FIG. 3 shows a schematic diagram of the detection mechanism of the detection device detecting a battery cell according to the embodiments in the first aspect of the present disclosure;
FIG. 4 shows a schematic diagram of the detection device in which a battery cell has left a second detection sub-region according to the embodiments in the first aspect of the present disclosure;

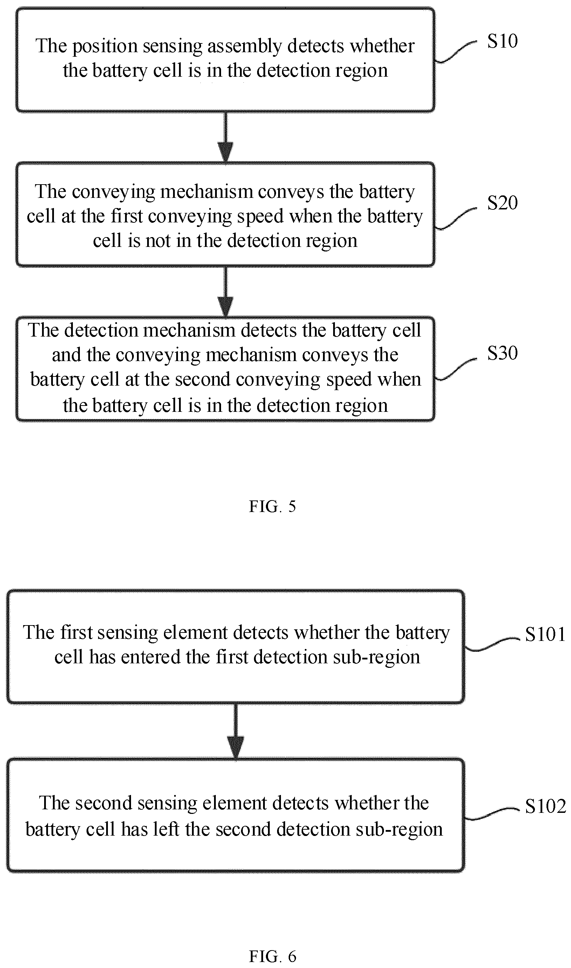

FIG. 5 shows a flowchart of a detection method for detecting an object according to the embodiments in a second aspect of the present disclosure; and
FIG. 6 shows a flowchart of a detection method for detecting an object according to the embodiments in the second aspect of the present disclosure.

Reference numerals: detection device 100, detection mechanism 10, radiation emitter 11, radiation receiver 12, first receiver 121, second receiver 122, conveying mechanism 20, first detection sub-region 30, second detection sub-region 40, collimation mechanism 50, collimation groove 51, battery cell 200.

### DETAILED DESCRIPTION OF EMBODIMENTS

Embodiments of the present disclosure will be described in detail below. Examples of the embodiments are shown in the accompanying drawings, in which the same or similar reference numerals throughout represent the same or similar elements or elements having the same or similar functions. The embodiments described below with reference to the accompanying drawings are exemplary and are just used to explain the present disclosure, and should not be construed as limiting the present disclosure.

The present disclosure provides a detection device for detecting an object, which may ensure an accuracy of object detection while improving an efficiency of object detection, thereby improving an efficiency of object production.

According to the embodiments in a first aspect of the present disclosure, a detection device for detecting an object is provided. A detection region is provided between a radiation emitter and each radiation receiver of a detection mechanism, and a conveying mechanism is provided between the radiation emitter and the radiation receiver. When an object is placed on the conveying mechanism, the conveying mechanism may convey the object at a first conveying speed. When a position sensing assembly detects that the object is in the detection region, the conveying mechanism may switch from the first conveying speed to a second conveying speed, then a conveying speed of the object decreases, and the detection mechanism begins to detect the object. The detection mechanism may detect a portion of the object in a detection region corresponding to each radiation receiver. When the position sensing assembly detects that the object is not in the detection region, it indicates that the detection of the object is completed, and the detection mechanism may stop detection. Then, the conveying mechanism may switch from the second conveying speed to the first conveying speed, and the conveying speed of the object may return to normal. By providing at least two radiation receivers, a segmented detection may be performed on the object after the object has entered the detection region. After the detection of the object is completed, segmented detection results may be stitched to obtain a complete detection result of the object. Since the conveying speed of the conveying mechanism decreases when the detection mechanism is detecting the object, the detection result of the object may be more accurate. Therefore, the accuracy of object detection may be ensured while improving the efficiency of object detection, thereby improving the efficiency of object production.

The present disclosure further provides a detection method for detecting an object. In the detection method, the detection device may be used to ensure the accuracy of object detection while improving the efficiency of object detection.

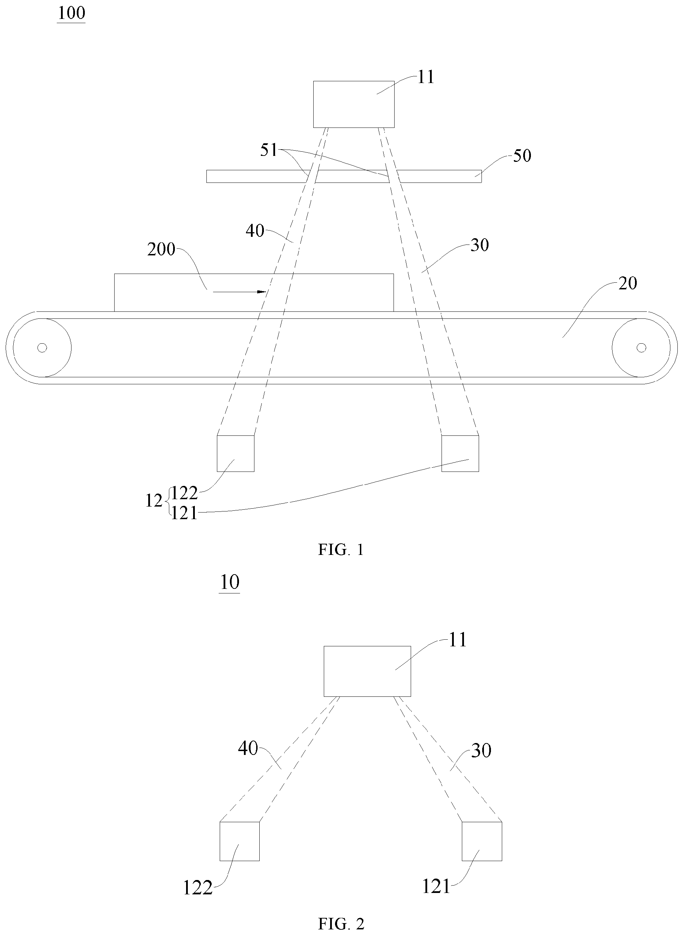

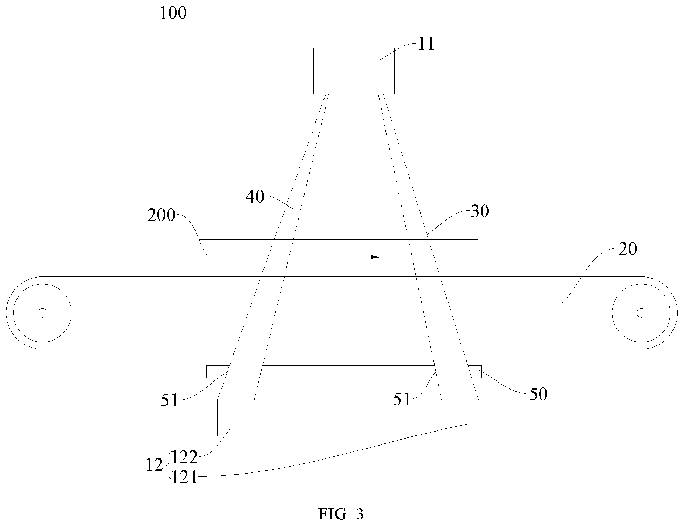

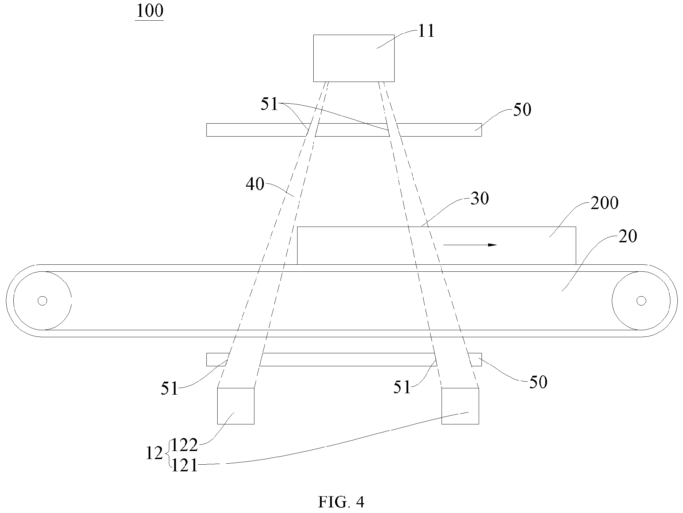

A detection device 100 for detecting an object 200 according to the embodiments of the present disclosure will be described below with reference to FIG. 1 to FIG. 4.

As shown in FIG. 1 to FIG. 4, the detection device 100 for detecting the object 200 according to the embodiments in the first aspect of the present disclosure includes: a detection mechanism 10, a position sensing assembly and a conveying mechanism 20.

It should be noted that the detection device for detecting the object described in the present disclosure has no specific limitations on a type of the object to be detected. In the following embodiments, for convenience of understanding, detecting a battery cell is illustrated by way of example, but this has no impact on the scope of protection of the present disclosure, and the battery cell in the embodiments may be replaced with any object that needs to be detected using X-rays.

The detection mechanism 10 includes a radiation emitter 11 and at least two radiation receivers 12. The at least two radiation receivers 12 are spaced apart in a conveying direction of the battery cell 200. A detection region is provided between the radiation emitter 11 and each radiation receiver 12. The detection mechanism 10 is used to detect the battery cell 200 when the battery cell 200 is in the detection region. The position sensing assembly is used to detect whether the battery cell 200 is in the detection region. The conveying mechanism 20 is provided between the radiation emitter 11 and the radiation receivers 12 to convey the battery cell 200, and the conveying mechanism 20 is used to convey the battery cell 200 at a first conveying speed when the detection mechanism 10 is not detecting the battery cell 200 and convey the battery cell 200 at a second conveying speed when the detection mechanism 10 is detecting the battery cell 200. The first conveying speed is greater than the second conveying speed.

Specifically, the detection region is provided between the radiation emitter 11 and each radiation receiver 12 of the detection mechanism 10, and the conveying mechanism 20 is provided between the radiation emitter 11 and the radiation receiver 12. When the battery cell 200 is placed on the conveying mechanism 20, the conveying mechanism 20 may convey the battery cell 200 at the first conveying speed. When the position sensing assembly detects that the battery cell 200 is in the detection region, the conveying mechanism 20 may switch from the first conveying speed to the second conveying speed, then the conveying speed of the battery cell 200 decreases, and the detection mechanism 10 begins to detect the battery cell 200. The detection mechanism 10 may detect a portion of the battery cell 200 in the detection region corresponding to each radiation receiver 12. When the position sensing assembly detects that the battery cell 200 is not in the detection region, it indicates that the detection of the battery cell 200 is completed, and the detection mechanism 10 may stop detection. Then, the conveying mechanism 20 may switch from the second conveying speed to the first conveying speed, and the conveying speed of the battery cell 200 may return to normal.

By providing at least two radiation receivers 12, a segmented detection may be performed on the battery cell 200 after the battery cell 200 has entered the detection region. After the detection of the battery cell 200 is completed, segmented detection results may be stitched to obtain a complete detection result of the battery cell 200. Since the conveying speed of the conveying mechanism 20 decreases when the detection mechanism 10 is detecting the battery cell 200, the detection result of the battery cell 200 may be more accurate.

The detection device 100 for detecting the battery cell 200 according to the embodiments in the first aspect of the present disclosure may ensure the detection accuracy of the battery cell 200 while improving the detection efficiency of the battery cell 200, thereby improving the production efficiency of the battery cell 200.

Optionally, the detection mechanism 10 may be provided with a plurality of radiation receivers 12, and the plurality of radiation receivers 12 may be spaced apart in the conveying direction of the battery cell 200. When the conveying mechanism 20 conveys the battery cell 200 to the detection region, the conveying mechanism 20 may switch from the first conveying speed to the second conveying speed, then the conveying speed of the battery cell 200 decreases, and the radiation emitter 11 may emit radiation to the plurality of radiation receivers 12 simultaneously. The radiation may pass through the battery cell 200 and may be received by the radiation receivers 12 to achieve a defect detection of the battery cell 200. Due to a slow conveying speed of the battery cell 200 in the detection region, the plurality of radiation receivers 12 arranged in the conveying direction of the battery cell 200 may simultaneously detect a plurality of portions of the battery cell 200 when the battery cell 200 is in the detection region to reduce a stay time of the battery cell 200 in the detection region, so that the detection efficiency of the battery cell 200 may be greatly improved.

The detection of the battery cell 200 by the plurality of radiation receivers 12 may have an overlapping region. When the detection results of different portions of the battery cell 200 are stitched, the detection results in the overlapping region may be stacked, so that a data quality may be further improved, and the detection accuracy of the battery cell 200 may be improved.

It should be noted that a type of the radiation receiver 12 is not specifically limited here. The radiation receiver 12 may be a single-row detector or a multi-row narrow strip detector. When the radiation receiver 12 is the single-row detector, the detection mechanism 10 may detect the battery cell 200 by means of line scanning, and a surface scanning result may be formed by placing the battery cell 200 on the conveying mechanism 20 so that the battery cell 200 is moved while being scanned. Then, results from the plurality of radiation receivers 12 may be stitched to obtain a complete scanning result of the battery cell 200.

When the radiation receiver 12 is the multi-row narrow strip detector, a narrow surface scanning result may be formed when detecting the battery cell 200, and then a wide surface scanning result may be formed by conveying the battery cell 200 using the conveying mechanism 20. The use of the narrow strip detector may further reduce a detection time of the battery cell 200 at the second conveying speed, thereby increasing a detection speed of the battery cell 200.

In some embodiments, the conveying mechanism 20 includes a head end and a tail end opposite to each other in the conveying direction of the battery cell 200. The radiation receiver 12 at least includes a first receiver 121 at a position close to the head end of the conveying mechanism 20 and a second receiver 122 at a position close to the tail end of the conveying mechanism 20. The detection region includes a first detection sub-region 30 provided between the first receiver 121 and the radiation emitter 11 and a second detection sub-region 40 provided between the second receiver 122 and the radiation emitter 11.

Specifically, the first receiver 121 is provided at a position close to the head end of the conveying mechanism 20, and the second receiver 122 is provided at a position close to the tail end of the conveying mechanism 20. The first detection sub-region 30 is located between the first receiver 121 and the radiation emitter 11, and the second detection sub-region 40 is located between the second receiver 122 and the radiation emitter 11. When the detection device 100 detects the battery cell 200, the conveying mechanism 20 may convey the battery cell 200. After the position sensing assembly detects that the battery cell 200 is in the first detection sub-region 30, the detection mechanism 10 begins to detect the battery cell 200. The radiation emitter 11 and the first receiver 121 may detect a portion of the battery cell 200 in the first detection sub-region 30, and the radiation emitter 11 and the second receiver 122 may detect a portion of the battery cell 200 in the second detection sub-region 40. The conveying mechanism 20 may convey the battery cell 200 at the second conveying speed.

By simultaneously detecting a portion of the battery cell 200 in a range of the first detection sub-region 30 and a portion of the battery cell 200 in a range of the second detection sub-region 40, the detection time of the battery cell 200 may be reduced and the detection efficiency of the battery cell 200 may be improved. In addition, since the detection of the battery cell 200 is performed in segments, the first receiver 121 and the second receiver 122 may respectively receive the radiation passing through the battery cell 200, and the two do not interfere with each other, so as to ensure a high detection accuracy of the battery cell 200.

Optionally, the position sensing assembly may include a first sensing element for detecting whether the battery cell 200 has entered the first detection sub-region 30 and a second sensing element for detecting whether the battery cell 200 has left the second detection sub-region 40. When the first sensing element detects that the battery cell 200 has entered the first detection sub-region 30, the radiation emitter 11 along with the first receiver 121 detect the battery cell 200, and the radiation emitter 11 along with the second receiver 122 detect the battery cell 200, so as to achieve a segmented detection of the battery cell 200.

Specifically, the first sensing element may detect whether the battery cell 200 has entered the first detection sub-region 30, and the second sensing element may detect whether the battery cell 200 has left the second detection sub-region 40. The first sensing element may continuously detect a position of the battery cell 200. When the first sensing element detects that the conveying mechanism 20 has conveyed the battery cell 200 to the first detection sub-region 30, the conveying mechanism 20 may switch from the first conveying speed to the second conveying speed, the radiation emitter 11 along with the first receiver 121 detect the battery cell 200, and the radiation emitter 11 along with the second receiver 122 detect the battery cell 200. The battery cell 200 may continuously move in the conveying direction at the second conveying speed. After a front end of the battery cell 200 passes through the first detection sub-region 30, a front portion of the battery cell 200 is detected by the radiation emitter 11 and the first receiver 121, and a rear portion of the battery cell 200 is detected by the radiation emitter 11 and the second receiver 122. After the second sensing element detects that the battery cell 200 has left the second detection sub-region 40, it indicates that the detection of the battery cell 200 is completed. The conveying mechanism 20 may then switch from the second conveying speed to the first conveying speed, and the battery cell 200 that has been detected may be quickly conveyed out of the detection region.

Therefore, the detection efficiency of the battery cell 200 may be further improved by detecting the position of the battery cell 200 using the first sensing element and the second sensing element.

It may be understood that the radiation receiver 12 may further include a third receiver, a fourth receiver ... an n^{th} receiver. The plurality of receivers are provided between the first receiver 121 and the second receiver 122 and are spaced apart from each other. Accordingly, the detection region includes a third detection sub-region, a fourth detection sub-region... an n^{th} detection sub-region. When the first sensing element detects that the battery cell 200 has entered the first detection sub-region 30, the radiation emitter 11 along with each radiation receiver 12 may simultaneously detect the battery cell 200. By providing the plurality of radiation receivers 12, a movement distance of the battery cell 200 at the second conveying speed may be reduced, thereby further improving the detection efficiency of the battery cell 200.

In a case of n radiation receivers 12, the n radiation receivers 12 are equally spaced, and a distance between two adjacent radiation receivers 12 is one of n equal parts of a length of the battery cell 200. That is to say, a distance between the first receiver 121 and the second receiver 122 is the same as the length of the battery cell 200, and the n radiation receivers 12 may divide the battery cell 200 into n equal parts in a length direction. The first receiver 121 and the second receiver 122 respectively correspond to the front end and the rear end of the battery cell 200 in the length direction, and the other radiation receivers 12 may correspond to n equal-part points of the battery cell 200. In this way, the n radiation receivers 12 may divide the battery cell 200 into n-1 segments in the length direction. When the radiation emitter 11 and the first receiver 121 begin to detect the battery cell 200 that has entered the first detection sub-region 30, the other radiation receivers 12 operate simultaneously. When the second sensing element detects that the battery cell 200 has left the second detection sub-region 40, each radiation receiver 12 has completed the detection of a portion of the battery cell 200 in a corresponding region, so that the detection efficiency of the battery cell 200 may be further improved.

In some embodiments, the detection device 100 further includes a collimation mechanism 50 having at least two collimation grooves 51. The collimation grooves 51 are used to filter an interference radiation to achieve a collimation of radiation, and each collimation groove 51 corresponds to one respective radiation receiver 12.

Specifically, when the radiation emitter 11 emits radiation to the radiation receiver 12, scattering and reflection phenomena may occur due to the nature of radiation and an influence of environment. The scattered and reflected radiation may form interference radiation, which may cause interference when the radiation receiver 12 receives a detection signal and result in a large noise in the detection data. Since the collimation mechanism 50 is provided and each collimation groove 51 corresponds to one respective radiation receiver 12, the collimation grooves 51 may filter the scattered and reflected interference radiation when the radiation passes through the collimation grooves 51, thereby reducing the noise in the detection data and improving the detection accuracy of the detection device 100.

It may be understood that the number of collimation grooves 51 of the collimation mechanism 50 corresponds to the number of radiation receivers 12. For example, in a case of a plurality of radiation receivers 12, the collimation mechanism 50 includes a plurality of collimation grooves 51, and each collimation groove 51 corresponds to one respective radiation receiver 12.

It should be noted that a width of the collimation groove 51 is not specifically limited here. The larger the width of the collimation groove 51, the more radiation passing through the collimation groove 51, and the higher the detection efficiency of the battery cell 200, but accordingly, more signal noise may be received by the radiation receiver 12 through the collimation groove 51, which may result in a lower detection accuracy of the battery cell 200. In contrast, the smaller the width of the collimation groove 51, the fewer radiation passing through the collimation groove 51, and the less signal noise received by the radiation receiver 12, which may result in a higher detection accuracy of the battery cell 200 and a lower detection efficiency of the battery cell 200. The width of the collimating groove 51 may be adjusted according to the requirements for the detection accuracy and the detection efficiency of the battery cell 200 in practical detection of the battery cell 200.

It should also be noted that a material of the collimation mechanism 50 is not specifically limited here. The material of the collimation mechanism 50 may be an elemental protective material such as lead, iron, etc., or may be a composite protective material such as barium cement, lead rubber, etc. The material of the collimation mechanism 50 may be selected according to actual needs, as long as the collimation mechanism 50 may have a good shielding effect for radiation in regions other than the collimation grooves 51.

As shown in FIG. 1, FIG. 3 and FIG. 4, optionally, the collimation mechanism 50 includes a first collimator provided between the radiation emitter 11 and the conveying mechanism 20 and/or a second collimator provided between the conveying mechanism 20 and the radiation receiver 12, and each of the first collimator and the second collimator is provided with at least two collimation grooves 51.

Specifically, the collimation mechanism 50 may be provided at different positions of the detection device 100. For example, the collimation mechanism 50 may be provided between the radiation emitter 11 and the conveying mechanism 20, or between the conveying mechanism 20 and the radiation receiver 12, or both between the radiation emitter 11 and the conveying mechanism 20 and between the conveying mechanism 20 and the radiation receiver 12. When a first collimator is provided between the radiation emitter 11 and the conveying mechanism 20, radiation emitted from the radiation emitter 11 may be firstly filtered by the first collimator, and the collimated radiation is then used to detect the battery cell 200 on the conveying mechanism 20, so that the detection accuracy may be improved. When a second collimator is provided between the conveying mechanism 20 and the radiation receiver 12, radiation emitted from the radiation emitter 11 may be firstly used to detect the battery cell 200, and the radiation passing through the battery cell 200 is collimated by the second collimator and then received by the radiation receiver 12, so that the detection accuracy may be improved. When the first collimator is provided between the radiation emitter 11 and the conveying mechanism 20 and the second collimator is provided between the conveying mechanism 20 and the radiation receiver 12 simultaneously, the detection accuracy of the battery cell 200 may be further improved through dual filtering.

Optionally, the position sensing assembly may further include a distance sensing element, which is used to detect a movement distance of the battery cell 200. When the detection mechanism 10 detects the battery cell 200, if the detection mechanism 10 includes a plurality of radiation receivers 12, the plurality of receivers may divide the detection region into a plurality of detection sub-regions, and each radiation receiver 12 corresponds to one respective detection sub-region between that radiation receiver 12 and the radiation emitter 11. When being detected, the battery cell 200 may be divided into a plurality of detection segments that may be detected simultaneously, and a length of each detection segment in the conveying direction of the battery cell 200 is related to the number of radiation receivers 12. The more the radiation receivers 12, the shorter each detection segment. In contrast, the fewer the radiation receivers 12, the longer each detection segment.

By providing the distance sensing element to detect the movement distance of the battery cell 200, it is possible to detect whether the movement distance of the battery cell 200 has reached a predetermined detection segment length. If it is detected that the movement distance of the battery cell 200 has not reached the predetermined detection segment length, the conveying mechanism 20 may continue to convey the battery cell 200, and the detection mechanism 10 may continue to detect the battery cell 200. In this way, after the detection of the battery cell 200 is completed, it may be ensured that an entire range of the battery cell 200 has been detected to avoid missed detection, thereby improving the detection accuracy of the battery cell 200.

In some embodiments, the detection device 100 may further include an imaging assembly, which is used to perform stitching imaging based on detection results of the detection mechanism 10.

Specifically, after the conveying mechanism 20 conveys the battery cell 200 to the detection region and the detection mechanism 10 completes the detection of the battery cell 200, at least two radiation receivers 12 may obtain detection results of the battery cell 200 at different positions. The imaging assembly may stitch the detection results obtained by different radiation receivers 12 to form a complete detection result of the battery cell 200.

If the detection mechanism 10 includes a plurality of radiation receivers 12, the detection results obtained by the plurality of radiation receivers 12 may have an overlapping region. When the imaging assembly performs stitching imaging on the detection results, stack imaging may be performed for the overlapping region, so that the detection accuracy of the overlapping region may be improved.

Therefore, the accuracy of the detection result of the battery cell 200 may be ensured.

A specific structure of a detection device 100 will be described below according to the detection device 100 for detecting the battery cell 200 provided in the embodiments of the present disclosure.

The detection device 100 includes a detection mechanism 10, a position sensing assembly, a conveying mechanism 20, a collimation mechanism 50 and an imaging assembly.

The detection mechanism 10 includes a radiation emitter 11 and a radiation receiver 12, and a detection region is provided between the radiation emitter 11 and the radiation receiver 12. The conveying mechanism 20 is provided between the radiation emitter 11 and the radiation receiver 12 to convey the battery cell 200. The conveying mechanism 20 is used to convey the battery cell 200 at a first conveying speed when the detection mechanism 10 is not detecting the battery cell 200 and is used to convey the battery cell 200 at a second conveying speed when the detection mechanism 10 is detecting the battery cell 200. The first conveying speed is greater than the second conveying speed. The radiation receiver 12 includes a first receiver 121 provided at a position close to a head end of the conveying mechanism 20 and a second receiver 122 provided at a position close to a tail end of the conveying mechanism 20. The detection region includes a first detection sub-region 30 provided between the first receiver 121 and the radiation emitter 11 and a second detection sub-region 40 provided between the second receiver 122 and the radiation emitter 11.

The position sensing assembly includes a first sensing element used to detect whether the battery cell 200 has entered the first detection sub-region 30 and a second sensing element used to detect whether the battery cell 200 has left the second detection sub-region 40. When the first sensing element detects that the battery cell 200 has entered the first detection sub-region 30, the radiation emitter 11 along with the first receiver 121 detect the battery cell 200, and the radiation emitter 11 along with the second receiver 122 detect the battery cell 200, so as to perform a segmented detection of the battery cell 200. The imaging assembly may perform stitching imaging based on detection results of the detection mechanism 10.

The collimation mechanism 50 is provided between the radiation emitter 11 and the conveying mechanism 20 and has two collimation grooves 51. The collimation grooves 51 are used to filter interference radiation to achieve a collimation of radiation. Each collimation groove 51 corresponds to one respective radiation receiver 12.

According to the embodiments in a second aspect of the present disclosure, a detection method for detecting a battery cell 200 is provided. The detection method may be applied to a detection device 100 for detecting the battery cell 200. The detection device 100 includes a detection mechanism 10, a position sensing assembly and a conveying mechanism 20. The detection method includes steps S10 to S30.

In S10, the position sensing assembly detects whether the battery cell 200 is in the detection region.

In S20, the conveying mechanism 20 conveys the battery cell 200 at the first conveying speed when the battery cell 200 is not in the detection region.

In S30, the detection mechanism 10 detects the battery cell 200 and the conveying mechanism 20 conveys the battery cell 200 at the second conveying speed when the battery cell 200 is in the detection region.

In an embodiment of the present disclosure, detecting whether the battery cell 200 is in the detection region by using the position sensing assembly may include steps S101 and S102.

In S101, the first sensing element detects whether the battery cell 200 has entered the first detection sub-region 30.

In S102, the second sensing element detects whether the battery cell 200 has left the second detection sub-region 40.

In an embodiment of the present disclosure, the detection method further includes the following steps.

When the first sensing element detects that the battery cell 200 has entered the first detection sub-region 30, the conveying mechanism 20 conveys the battery cell 200 at the second conveying speed, the radiation emitter 11 and the first receiver 121 detect the battery cell 200 in the first detection sub-region 30, and the radiation emitter 11 and the second receiver 122 detect the battery cell 200 in the second detection sub-region 40.

The second sensing element detects whether the battery cell 200 has left the second detection sub-region 40.

When the second sensing element detects that the battery cell 200 has left the second detection sub-region 40, the conveying mechanism 20 switches to the first conveying speed to convey the battery cell 200, and the detection mechanism 10 stops detection.

After the detection mechanism 10 has detected the battery cell 200, the imaging assembly performs stitching imaging based on detection results of the detection mechanism 10.

It should be understood that although the terms "first", "second" and so on may be used herein to describe various units, those units should not be limited by the terms. The terms are just used to distinguish one unit from another unit. For example, without departing from the scope of the exemplary embodiments of the present disclosure, a first unit may be named as a second unit, and similarly, a second unit may be named as a first unit.

It should be understood that the term "and/or" herein is just used to describe a relationship between related objects, indicating that there may be three types of relationships. For example, A and/or B may represent A alone, B alone, and both A and B. The term "/and" is used here to describe another relationship between related objects, indicating that there may be two types of relationships. For example, A /and B may represent A alone, and both A and B. In addition, a symbol "/" herein generally indicates an "or" relationship between related objects.

It should be understood that when a unit is referred to as being "connected to", "connected with" or "coupled to" a further unit, the unit may be directly connected or coupled to the further unit, or an intermediate unit may be provided. When a unit is referred to as being "directly connected to" or "directly coupled to" a further unit, it means that no intermediate unit is provided. In addition, other words used to describe relationships between units should be interpreted in a similar way (for example, "between ..." and "directly between ...", "adjacent to" and "directly adjacent to", and so on).

It should be understood that the terms used herein are just intended to describe specific embodiments and are not intended to limit the exemplary embodiments of the present disclosure. Singular forms "a", "an" and "the" herein are intended to include a plural, unless the context expressly indicates otherwise. It should also be understood that the terms "including", "comprising" and/or "containing" used herein indicate the presence of the feature, number, step, operation, unit and/or assembly, but do not exclude the presence or addition of one or more other features, numbers, steps, operations, units, assemblies and/or combinations thereof.

The present disclosure has been described through the above-mentioned embodiments. However, it should be understood that the above-mentioned embodiments are just for the purpose of examples and illustration and are not intended to limit the present disclosure to the described embodiments. Those skilled in the art may understand that more variations and modifications may be made according to the teachings of the present disclosure, and those variations and modifications all fall within the scope of protection of the present disclosure.

## Claims

1. A detection device for detecting an object, comprising:
a detection mechanism (10), comprising a radiation emitter (11) and at least two radiation receivers (12), wherein the at least two radiation receivers (12) are spaced apart in a conveying direction of an object (200), a detection region is provided between the radiation emitter (11) and each radiation receiver (12), and the detection mechanism (10) is configured to detect the object (200) when the object (200) is in the detection region;
a position sensing assembly configured to detect whether the object (200) is in the detection region; and
a conveying mechanism (20) provided between the radiation emitter (11) and the radiation receivers (12) to convey the object (200), wherein the conveying mechanism (20) is configured to convey the object (200) at a first conveying speed when the detection mechanism (10) is not detecting the object (200) and convey the object (200) at a second conveying speed when the detection mechanism (10) is detecting the object (200), and the first conveying speed is greater than the second conveying speed.

2. The detection device for detecting the object according to claim 1, wherein the conveying mechanism (20) comprises a head end and a tail end opposite to each other in the conveying direction of the object (200);
wherein the radiation receiver (12) at least comprises a first receiver (121) at a position close to the head end of the conveying mechanism (20) and a second receiver (122) at a position close to the tail end of the conveying mechanism (20); and
wherein the detection region comprises a first detection sub-region (30) provided between the first receiver (121) and the radiation emitter (11) and a second detection sub-region (40) provided between the second receiver (122) and the radiation emitter (11).

3. The detection device for detecting the object according to claim 2, wherein the position sensing assembly comprises a first sensing element configured to detect whether the object (200) has entered the first detection sub-region (30) and a second sensing element configured to detect whether the object (200) has left the second detection sub-region (40),
wherein when the first sensing element detects that the object (200) has entered the first detection sub-region (30), the radiation emitter (11) along with the first receiver (121) detect the object (200), and the radiation emitter (11) along with the second receiver (122) detect the object (200), so as to perform a segmented detection of the object (200).

4. The detection device for detecting the object according to claim 1, further comprising:
a collimation mechanism (50) having at least two collimation grooves (51), wherein the collimation grooves (51) are configured to filter an interference radiation to perform a collimation of radiation, and each collimation groove (51) corresponds to one respective radiation receiver (12).

5. The detection device for detecting the object according to claim 4, wherein the collimation mechanism (50) comprises a first collimator provided between the radiation emitter (11) and the conveying mechanism (20) and/or a second collimator provided between the conveying mechanism (20) and the radiation receiver (12), and each of the first collimator and the second collimator is provided with at least two collimation grooves (51).

6. The detection device for detecting the object according to claim 1, further comprising:
an imaging assembly configured to perform stitching imaging based on detection results of the detection mechanism (10).

7. A detection method for detecting an object applied to a detection device (100) for detecting an object (200), wherein the detection device (100) comprises a detection mechanism (10), a position sensing assembly and a conveying mechanism (20), and the detection method comprises:
detecting whether the object (200) is in a detection region by using the position sensing assembly;
conveying the object (200) at a first conveying speed by using the conveying mechanism (20) when the object (200) is not in the detection region; and
detecting the object (200) by using the detection mechanism (10) and conveying the object (200) at a second conveying speed by using the conveying mechanism (20) when the object (200) is in the detection region.

8. The detection method for detecting the object according to claim 7, wherein the detecting whether the object (200) is in a detection region by using the position sensing assembly comprises:
detecting whether the object (200) has entered a first detection sub-region (30) by using a first sensing element; and
detecting whether the object (200) has left a second detection sub-region (40) by using a second sensing element.

9. The detection method for detecting the object according to claim 8, wherein when the first sensing element detects that the object (200) has entered the first detection sub-region (30), the radiation emitter (11) and a first receiver (121) detect the object (200) in the first detection sub-region (30), and the radiation emitter (11) and a second receiver (122) detect the object (200) in the second detection sub-region (40); and
wherein when the second sensing element detects that the object (200) has left the second detection sub-region (40), the detection mechanism (10) stops detection.

10. The detection method for detecting the object according to claim 7, wherein after the detection mechanism (10) has detected the object (200), a stitching imaging is performed based on detection results of the detection mechanism (10) by using an imaging assembly.
